# EUROPÄISCHE PATENTSCHRIFT

(11) **EP 2 931 675 B1**
(45) Veröffentlichungstag und Bekanntmachung des Hinweises auf die Patenterteilung: **08.11.2017**
(21) Anmeldenummer: 13776735.6
(22) Anmeldetag: 09.09.2013
(51) Int. Cl.: C04B 2/12

(54) **VERFAHREN ZUM BRENNEN VON STÜCKIGEM GUT**
METHOD FOR BURNING LUMP MATERIAL
PROCÉDÉ POUR BRÛLER DES MATIÈRES EN MORCEAUX

(30) Priorität: 12.12.2012 DE 102012112168
(43) Veröffentlichungstag der Anmeldung: 21.10.2015
(73) Patentinhaber: Maerz Ofenbau AG, 8027 Zürich (CH)
(72) Erfinder: PIRINGER, Hannes, CH-5712 Beinwill am See (CH); BUCHER, Patrick, 5012 Schönenwerd (CH)
(74) Vertreter: thyssenkrupp Intellectual Property GmbH
(86) Internationale Anmeldenummer: PCT/EP2013/068623
(87) Internationale Veröffentlichungsnummer: WO 2014/090427

(56) Entgegenhaltungen:
- DE-B3-102011 051 675
- DE-C2- 3 227 395

## Beschreibung

Die Erfindung betrifft ein Verfahren zum Brennen von stückigem Gut, insbesondere Kalkstein, Dolomitstein, Magnesitstein oder andere Karbonatgesteine, in wenigstens einem eine Vorwärmzone, eine Brennzone und eine Kühlzone umfassenden Schacht, wobei Kohle über Brennerlanzen zugeführt wird.

Die Brennstoffkosten beim Kalkbrennen sind erheblich und können mehr als 50% der Herstellkosten betragen. Da Kohle in den meisten Fällen der kostengünstigste Energieträger ist, werden heutzutage die meisten Kalköfen mit Kohle gefeuert. Kohle kann in ihren Eigenschaften aber sehr unterschiedlich sein. So wirkt sich ein hoher Gehalt an Asche und Schwefel nachteilig aus, da der Branntkalk in unerwünschter Weise kontaminiert wird.

Eine besondere Eigenschaft der Kohle ist ihr Blähgrad. Von zahlreichen praktischen Versuchen weiß man, das Kohle mit einem Blähgrad von mehr als 1,0 in Kalköfen, insbesondere in Gleichstrom-Gegenstrom-Regenerativ-Kalköfen bisher nicht verwendet werden konnte, da es zu gravierenden Betriebsproblemen, wie beispielsweise dem Verstopfen der Brennerlanzen und zum Abbrand der Brennerlanzen durch Verzunderung oder Schmelzen, kam. Wegen der eingeschränkten Verwendbarkeit derartigre Kohle in GGR-Kalkschachtöfen wurde bisher entweder ein Drehrohrofen eingesetzt oder man musste auf Petrolkoks bzw. auf flüssige oder gasförmige Brennstoffe ausweichen. Drehrohröfen haben jedoch den erheblichen Nachteil, dass sie 50-100% mehr Brennstoff verbrauchen als GGR-Kalköfen und dadurch in der Folge auch vielmehr CO₂ in die Atmosphäre ausgestoßen wird. Die Verwendung von Petrolkoks ist auch nachtteilig, da sein Schwefelgehalt bis zu 10-mal so hoch sein kann wie jener von Kohle, wodurch sich weitere Einschränkungen ergeben. Außerdem sind flüssige und gasförmige Brennstoffe unter Umständen nicht verfügbar oder aber wesentlich teurer als Kohle.

Aus der DE 32 27 395 C2 ist ein Verfahren zum Herstellen von Briketts für das Festbett eines Vergaserreaktors oder Schachtofens bekannt, wobei 30 - 85% nichtbackende Rohkohle und 15 - 70% backende Rohkohle gemischt und anschließend brikettiert werden, wobei die backende Kohle eine Backfähigkeit (swelling index) von ≥ 5 aufweist.

Aus der DE 10 2011 051 675 B3 ist ferner ein Verfahren zum Brennen von stückigem Gut in wenigstens einem eine Vorwärmzone, eine Brennzone und eine Kühlzone umfassenden Schacht offenbart, wobei die Kohle mit einem Transportgas über Brennerlanzen zugeführt wird und die Temperatur der Kohle über die Menge und/oder Temperatur des Transportgases eingestellt wird. Des Weiteren kann über die Brennerlanzen eine Flüssigkeit, insbesondere Wasser, eingeführt werden, wobei durch das Verdampfen des Wassers die Temperaturerhöhung der Kohle entsprechend begrenzt wird.

Die Erfindung liegt die Aufgabe zugrunde ein Verfahren zum Brennen von stückigem Gut anzugeben, mit dem die Brennstoffkosten reduziert werden können.

Erfindungsgemäß erfolgt das Verfahren zum Brennen von stückigem Gut in wenigstens einem eine Vorwärmzone, eine Brennzone und eine Kühlzone umfassenden Schacht, wobei Kohle mit einem Blähgrad > 1 mit einem Transportmedium über Brennerlanzen zugeführt wird, die Brennerspitzen aufweisen, über die die Kohle mit dem Transportmedium in den Schacht austritt, wobei die Temperatur der Kohle in den Brennerlanzen unter einem Temperaturwert gehalten wird, bei dem sich Schmelzphasen der verwendeten Kohle bilden. Dabei kommt ein Transportmedium zum Transport der Kohle zur Anwendung, welches im Schacht, in dem sich an die Brennerspitze unmittelbar anschließenden Bereich, eine sauerstoffarme Atmosphäre bildet, um die Zündung der Kohle nach Austritt aus der Brennerlanze zu verzögern. Als Transportmedium kommt dabei ein inertes Gas, insbesondere Stickstoff, zur Anwendung, das über die Brennerlanze als Transportmedium für die Kohle zugeführt wird. Das Gas dient zur Kühlung der Kohle und sorgt für eine sauerstoffarme Atmosphäre im Bereich der Brennerspitze In dieser Anmeldung wird der Blähgrad nach der Norm ASTM D720-91 verstanden.

Die Kohle wird üblicherweise in Form von Kohlenstaub pneumatisch über Brennerlanzen in den Ofen eingeblasen. Die Brennerlanzen befinden sich in der Vorwärmzone oder Brennzone des Schachtes und sind von stückigem Gut, insbesondere Kalkstein, umgeben. Dabei beträgt die Temperatur des stückigen Guts am oberen Ende der Vorwärmzone etwa 100°C, während sie am unteren Ende ca. 50°C unter der für das zu kalzinierende Gut typischen Kalzinierungstemperatur liegt, welche für Kalkstein typischerweise ca. 750°C bis 800°C beträgt. Durch die Wände der Brennerlanzen wird die Wärme des stückigen Guts von außen nach innen übertragen, wodurch sich die zugeführte Kohle erwärmt, bevor sie die Brennerlanzen verlässt und außerhalb derselben automatisch zündet.

Bei den der Erfindung zugrundeliegenden Versuchen hat sich gezeigt, dass Kohle mit einem Blähgrad >1 ab einer bestimmten Temperatur Schmelzphasen bildet, welche sich an den Innenwänden der Brennerlanzen festsetzen und diese nach kurzer Zeit verstopfen. Diese Ablagerungen innerhalb der Brennerlanzen können während der Regenerativphase eines Ofenschachtes außerdem zünden und dadurch die Brennerlanzen sehr schnell zerstören. Man hat festgestellt, dass gerade die flüchtigen Bestandteile der Kohle mit einem Blähgrad >1 bei Überschreitung einer bestimmten Temperatur sehr schnell zu Anbackungen führen. Bei diesem Phänomen bildet sich zuerst eine Schmelzphase, welches durch das Ausgasen der flüchtigen Bestandteile aufbläht und die Brennerlanzen schnell verstopft. Man hat festgestellt, dass die flüchtigen Bestandteile der Kohle im Bereich von 200 - 300°C langsam und ab 450°C schnell entweichen. Je nach Kohlesorte können diese Werte aber stark variieren.

Bei den der Erfindung zugrundeliegenden Versuchen an verschiedenen Kohlen hat sich herausgestellt, dass die Phasenumwandlungen meistens erst ab 150°C beginnen. Blähexperimente in Laboröfen haben zudem ergeben, dass das Aufblähen der Kohle je nach Kohlensorte bei unterschiedlichen Temperaturen einsetzen kann. Typischerweise liegt diese Temperatur bei etwa 250°C. Hält man die Temperatur der Kohle in den Brennerlanzen jedoch unter dem Temperaturwert, bei dem sich Schmelzphasen der verwendeten Kohle bilden, kann Kohle mit einem Blähgrad >1 problemlos eingesetzt werden. Insbesondere in Nordamerika gibt es große Vorkommen von kostengünstiger Kohle, die einen erhöhten Blähgrad von >1 aufweist. Mit dem oben beschriebenen Verfahren kann nun diese kostengünstige Kohle in einem Kalkschachtofen eingesetzt werden, wodurch die Brennstoffkosten gegenüber der bisher verwendeten Kohle deutlich reduziert werden können.

Die unterschiedlichen Versuche haben neben den schon angeführten Ergebnissen ebenfalls aufgezeigt, dass die Temperatur der Kohle im Brennerrohr durch die entsprechenden Vorkehrungen zwar gesenkt wird, jedoch verteilt sich die Kohle mit Blähgrad >1 im Vergleich zu Kohle mit Blähgrad <1 schlechter im Brenngut und zündet unmittelbar nach Austritt aus der Brennerlanze, was zu einer sehr hohen Hitzeentwicklung im Bereich der Brennerspitze führte. Der Abbrand von der Brennerspitze aufwärts war die Folge. Um dieses zu vermeiden, wird ein inertes Gas, insbesondere Stickstoff, als Transportmedium für die Kohle eingesetzt. Das Zündverhalten der Kohle nach Austritt aus der Brennerlanze wird dadurch verzögert, was der Hitzeentwicklung im Bereich der Brennerspitze entgegenwirkt. Eine Verlängerung der Betriebsdauer der Brennerlanzen und somit eine Erhöhung der Ofenkapazität bzw. eine Senkung der Stillstandzeit des Ofens ist die Folge.

Die Verwendung von Stickstoff hat zudem den Vorteil, dass nicht nur eine sauerstoffarme Atmosphäre im Bereich der Brennerspitze im Ofen geschaffen wird, sondern auch die Temperatur im Brennerrohr gesenkt und somit Anbackungen im Rohr vermieden werden.

Weitere Ausgestaltungen der Erfindung sind Gegenstand der Unteransprüche.

Die Brennerlanzen sind vorzugsweise in der Vorwärmzone oder der Brennzone des Schachtes angeordnet und stehen mit dem dort befindlichen stückigen Gut zur Erwärmung der Kohle in Wirkkontakt. Dabei wird die Temperatur der Kohle in den Brennerlanzen zweckmäßigerweise unter 250°C, vorzugsweise unter 200°C und höchstvorzugsweise unter 150°C gehalten.

Um diese Temperaturwerte einzuhalten, können zusätzlich ein oder mehrere der nachfolgend aufgeführten Maßnahmen ergriffen werden:
- Die Brennerlanzen werden mit einer Isolierung versehen, um dadurch den Wärmefluss von außen nach innen durch die Wandung der Brennerlanzen stark zu reduzieren, wodurch sich die Kohle entsprechend weniger erwärmt. Diese Maßnahme hat den Vorteil, dass der thermische Wirkungsgrad des Kalkofens nicht beeinträchtigt wird;
- Die Brennerlanzen werden gekühlt, wobei die Kühlung beispielsweise mit einem Gas oder einer Flüssigkeit erfolgen kann. So könnten beispielsweise die Brennerlanzen mit einer Ummantelung versehen werden, welche mit Wasser, Thermalöl oder Luft gekühlt wird. Auch dieses Verfahren hat nur einen unwesentlichen Einfluss auf den thermischen Wirkungsgrad des Kalkofens;
- Die Kohle wird vor der Zuführung zu den Brennerlanzen gekühlt, wobei die Temperatur der Kohle über die Menge und/oder Temperatur des Transportmediums eingestellt wird. Durch diese Maßnahmen wird die Kohle auf eine entsprechend geringere Temperatur innerhalb der Brennerlanzen erwärmt;
- Nicht brennbare Komponenten, insbesondere CaO- oder CaCO₃-haltige Komponenten werden zusammen mit der Kohle in die Brennerlanzen eingeführt, um die Temperatur der Kohle einzustellen. Hierfür könnte man beispielsweise den Staub aus Ofenabgasfiltern beimischen, um den Massenstrom zu erhöhen. Ein solcher Filterstaub stellt kein artfremdes Material dar, sodass es auch nicht zu einer Kontaminierung des Produktes kommt;
- Eine Flüssigkeit, insbesondere Wasser, wird über die Brennerlanzen eingeführt. Durch das Verdampfen des Wassers kann die Temperaturerhöhung der Kohle entsprechend begrenzt werden;
- Es werden kürzere Brennerlanzen verwendet oder eine radiale Anordnung vorgesehen. Durch diese Maßnahmen ergeben sich kleinere Oberflächen der Brennerlanzen, wodurch sich die Kohle entsprechend weniger stark erwärmt;
- Es wird eine Simultanfeuerung von Kohle und Gas vorgesehen. Dabei werden die Kohle und das Gas gleichzeitig über die Brennerlanzen zugeführt. Je geringer der Heizwert des Gases wäre, umso höher ist dessen Massenstrom, welcher die Kohle kühlen würde.

Im Folgenden werden weitere Ausgestaltungen der Erfindung an einem konkreten Ausführungsbeispiel näher beschrieben.

In der Zeichnung zeigen
- Fig. 1: eine Querschnittsdarstellung eines Gleichstrom-Gegenstrom-Regenerativ-Kalkofens,
- Fig. 2: eine vergrößerte Detaildarstellung im Bereich der Brennerlanzen,
- Fig. 3: ein Diagramm, das den Verlauf der Temperatur längs der Ofenachse zeigt und
- Fig. 4: eine Darstellung der Brennerlanzen im Ofen, mir angedeutetem Bereich der sauerstoffarmen Atmosphäre.

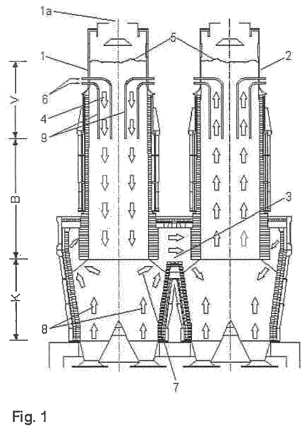

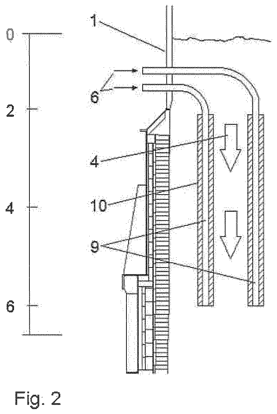

In Fig. 1 und 2 ist ein Gleichstrom-Gegenstrom-Regenerativ-Kalkofen dargestellt, der zwei Schächte 1, 2 mit jeweils einer Vorwärmzone V, einer Brennzone B und eine Kühlzone K sowie einen die beiden Schächte verbindenden Überstromkanal 3 aufweist. Beide Schächte werden in an sich bekannter Art und Weise abwechselnd als Brennschacht und Abgasschacht betrieben, wobei dem Brennschacht Verbrennungsluft 4 im Gleichstrom mit zu brennenden stückigen Gut 5 und Kohle 6 zugeführt werden. Bei dem stückigen Gut handelt es sich hier um Kalkstein. Die dabei entstehenden heißen Abgase 7 werden zusammen mit der von unten zugeführten erwärmten Kühlluft 8 über den Überstromkanal 3 in den Abgasschacht geleitet, wo die Abgase im Gegenstrom zum Kalkstein nach oben geleitet werden und den Kalkstein dabei vorwärmen. Nach einer vorgegebenen Zeitspanne von beispielsweise 15 min. wird die Funktion der beiden Schächte vertauscht, d. h. der Brennschacht wird zum Abgasschacht und umgekehrt. Dieses Verfahren erlaubt ein sehr effizientes Brennen des Kalksteins im Gleichstrom mit den Verbrennungsgasen und ein regeneratives Vorwärmen des Kalksteins in Gegenstrom zu den heißen Abgasen.

Die Kohle 6, die einen Blähgrad >l, insbesondere auch >2 aufweist, wird über Brennerlanzen 9 zugeführt.

Die Brennerlanzen 9 sind im dargestellten Ausführungsbeispiel im Bereich der Vorwärmzone V im Wesentlichen in Richtung der Schachtlängsachse 1a angeordnet und sind von dem Kalkstein umgeben. Der Brennstoff wird in Form von Kohlepulver mit Hilfe eines inerten Gases als Transportmediums über die Brennerlanzen zugeführt und erwärmt sich aufgrund der vom Kalkstein über die Wandung der Brennerlanzen nach innen übertragenden Wärme, sodass sich die Kohle 6 nach Austritt aus der Brennerlanze 9 mit der von oben in den Schacht eingeführten Verbrennungsluft 4 automatisch entzündet. Um nun die bei Verwendung von Kohle mit einem Blähgrad >1 gefürchteten Verstopfungen in den Brennerlanzen 9 zu vermeiden, müssen geeignete Maßnahmen ergriffen werden, damit die Kohle in den Brennerlanzen unter einem Temperaturwert gehalten wird, bei dem sich Schmelzphasen der verwendeten Kohle bilden. Je nach verwendeter Kohle liegt dieser Temperaturwert beispielsweise bei 250°C. Durch Abstimmung auf einen Temperaturwert von 200°C oder gar 150°C können die Anbackungen bei allen bisher bekannten Kohlearten vermieden werden.

Eine besonders zweckmäßige Maßnahme zur Reduzierung der Erwärmung der Kohle in den Brennerlanzen 9 stellt die Verwendung einer Isolierung 10 der Brennerlanze dar. Alternativ oder zusätzlich können auch ein oder mehrere der oben bereits erwähnten weiteren Maßnahmen zum Einsatz kommen.

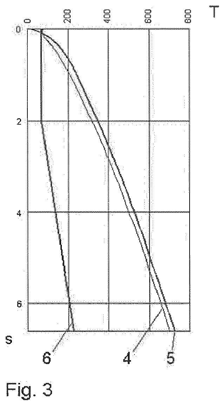

Im Diagramm gemäß Fig. 3 ist der Verlauf der Temperatur der zugeführten Kohle 6, der Verbrennungsluft 4 und des stückigen Guts (Kalkstein) 5 längs der Ofenachse 1a dargestellt. Abgebildet ist dabei der Bereich der Vorwärmzone von der Oberfläche des zu brennenden Kalksteins bis zum unteren Ende der Brennerlanzen 9.

Die Temperatur der Kohle erreicht in diesem Ausführungsbeispiel etwa 200°C am Austritt der Brennerlanzen 9. Der Kalkstein und die Verbrennungsluft 4 werden in diesem Bereich auf etwa 700°C erwärmt.

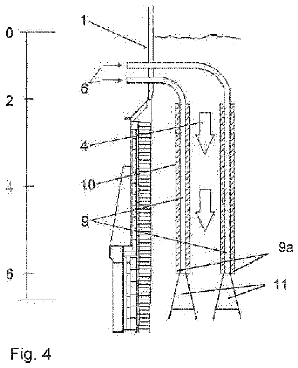

In Fig. 4 wird ein Teilbereich eines Schachtes 1 mit zwei Brennerlanzen 9 gezeigt. Kohle 6 wird gemeinsam mit dem Transportmedium, insbesondere Stickstoff, dem Schacht bzw. dem Ofen zugeführt. Das Transportmedium der Kohle 6 sorgt dafür, dass der Schmelzpunkt der Kohle in der Brennerlanze 9 nicht überschritten wird und im Schacht in dem sich an die Brennerspitze 9a unmittelbar anschließenden Bereich 11 eine sauerstoffarme Atmosphäre entsteht.

## Patentansprüche

1. Verfahren zum Brennen von stückigem Gut (5) in wenigstens einem eine Vorwärmzone (V), eine Brennzone (B) und eine Kühlzone (K) umfassenden Schacht (1, 2), wobei Kohle (6) mit einem Blähgrad > 1 mit einem Transportmedium über Brennerlanzen (9) zugeführt wird, die Brennerspitzen aufweisen, über die die Kohle mit dem Transportmedium in den Schacht austritt, wobei die Temperatur der Kohle (6) in den Brennerlanzen (9) unter einem Temperaturwert gehalten wird, bei dem sich Schmelzphasen der verwendeten Kohle (6) bilden,
wobei, ein Transportmedium zum Transport der Kohle Anwendung findet, welches im Schacht, in dem sich an die Brennerspitze (9a) unmittelbar anschließenden Bereich (11), eine sauerstoffarme Atmosphäre bildet, um die Zündung der Kohle nach Austritt aus der Brennerlanze zu verzögern,
**dadurch gekennzeichnet, dass** zur Umsetzung der sauerstoffarmen Atmosphäre und zur Kühlung der Kohle ein inertes Gas genutzt wird.

2. Verfahren nach Anspruch 1, **dadurch gekennzeichnet, dass** die Brennerlanzen (9) in der Vorwärmzone (V) oder der Brennzone (B) des Schachts (1, 2) angeordnet sind und mit dem dort befindlichen stückigen Gut (5) zur Erwärmung der Kohle (6) in den Brennerlanzen (9) in Wirkkontakt stehen.

3. Verfahren nach Anspruch 1, **dadurch gekennzeichnet, dass** die Temperatur der Kohle (6) in den Brennerlanzen (9) unter 250°C, vorzugsweise unter 200°C und höchstvorzugsweise unter 150°C, gehalten wird.

4. Verfahren nach Anspruch 1, **dadurch gekennzeichnet, dass** die Brennerlanzen (9) mit einer Isolierung (10) versehen werden.

5. Verfahren nach Anspruch 1, **dadurch gekennzeichnet, dass** die Brennerlanzen (9) gekühlt werden.

6. Verfahren nach Anspruch 1, **dadurch gekennzeichnet, dass** die Kohle (6) vor der Zuführung zu den Brennerlanzen (9) gekühlt wird.

7. Verfahren nach Anspruch 1, **dadurch gekennzeichnet, dass** die Temperatur der Kohle (6) über die Menge und/oder Temperatur des Transportmediums eingestellt wird.

8. Verfahren nach Anspruch 1, **dadurch gekennzeichnet, dass** als Transportmedium eine Flüssigkeit, insbesondere Wasser, in die Brennerlanzen (9) eingeführt wird, um die Temperatur der Kohle (6) einzustellen.

9. Verfahren nach Anspruch 1, **dadurch gekennzeichnet, dass** das Brennen des stückigen Guts (5) in einem Gleichstrom-Gegenstrom-Regenerativ-Kalkofens erfolgt, der wenigstens zwei Schächte (1, 2) mit jeweils einer Vorwärmzone (V), einer Brennzone (B) und einer Kühlzone (K) sowie einen die beiden Schächte (1, 2) verbindenden Überströmkanal (3) aufweist, wobei die beiden Schächte (1, 2) abwechselnd als Brennschacht und Abgasschacht betrieben werden.

## Claims

1. Method for burning lumpy stock (5) in at least one shaft (1, 2) which comprises a preheating zone (V), a burning zone (B) and a cooling zone (K), wherein coal (6) with a swelling index > 1 is supplied together with a transport medium via burner lances (9) which have burner tips via which the coal together with the transport medium emerges into the shaft, wherein the temperature of the coal (6) in the burner lances (9) is kept below a temperature value at which melt phases of the coal (6) that is used are formed,
wherein, for the transportation of the coal, use is made of a transport medium which, in the shaft, in the region (11) directly adjacent to the burner tip (9a), forms an oxygen-depleted atmosphere in order to delay the ignition of the coal after it emerges from the burner lance,
**characterized in that** an inert gas is used to realize the oxygen-depleted atmosphere and to cool the coal.

2. Method according to Claim 1, **characterized in that** the burner lances (9) are arranged in the preheating zone (V) or in the burning zone (B) of the shaft (1, 2) and are in operative contact with the lumpy stock (5) situated there for the purposes of heating the coal (6) in the burner lances (9).

3. Method according to Claim 1, **characterized in that** the temperature of the coal (6) in the burner lances (9) is kept below 250°C, preferably below 200°C and most preferably below 150°C.

4. Method according to Claim 1, **characterized in that** the burner lances (9) are equipped with insulation (10).

5. Method according to Claim 1, **characterized in that** the burner lances (9) are cooled.

6. Method according to Claim 1, **characterized in that** the coal (6) is cooled before being supplied to the burner lances (9).

7. Method according to Claim 1, **characterized in that** the temperature of the coal (6) is set by way of the flow rate and/or temperature of the transport medium.

8. Method according to Claim 1, **characterized in that**, as transport medium, a liquid, in particular water, is introduced into the burner lances (9) in order to set the temperature of the coal (6).

9. Method according to Claim 1, **characterized in that** burning the lumpy stock (5) is performed in a parallel flow-counter flow regenerative lime kiln which has at least two shafts (1, 2) each with a preheating zone (V), a burning zone (V) and a cooling zone (K) and which has a flow transfer duct (3) which connects the two shafts (1, 2), wherein the two shafts (1, 2) are operated alternately as burning shaft and as exhaust gas shaft.

## Revendications

1. Procédé de combustion d'un produit (5) en forme de morceaux dans au moins un puits (1, 2) comprenant une zone de préchauffage (V), une zone de combustion (B) et une zone de refroidissement (K), dans lequel du charbon (6) est apporté à une taux de soufflage > 1 avec un fluide de transport par l'intermédiaire de lances de brûleur (9) qui présentent des pointes de brûleur par lesquelles le charbon sort dans le puits avec le fluide de transport,
la température du charbon (6) étant maintenue dans les lances de brûleur (9) en dessous d'une valeur à laquelle le charbon (6) utilisé forme des phases fondues,
un fluide de transport qui forme une atmosphère pauvre en oxygène dans la partie (11) du puits qui est directement adjacente à la pointe (9a) du brûleur étant utilisé pour le transport du charbon pour ralentir l'allumage du charbon après sa sortie hors de la lance de brûleur,
**caractérisé en ce que**
un gaz inerte est utilisé pour former l'atmosphère pauvre en oxygène et pour le refroidissement du charbon.

2. Procédé selon la revendication 1, **caractérisé en ce que** les lances de brûleur (9) sont disposées dans la zone de préchauffage (V) ou dans la zone de combustion (B) du puits (1, 2) et y sont en contact efficace avec le produit (5) en forme de morceaux qui s'y trouve en vue de chauffer le charbon (6) présent dans les lances de brûleur (9).

3. Procédé selon la revendication 1, caractérisé en en ce que la température du charbon (6) est maintenue dans les lances de brûleur (9) en dessous de 250°C, de préférence en dessous de 200°C et de la façon la plus préférable en dessous de 150°C.

4. Procédé selon la revendication 1, caractérisé en en ce que les lances de brûleur (9) sont dotées d'une isolation (10).

5. Procédé selon la revendication 1, caractérisé en en ce que les lances de brûleur (9) sont refroidies.

6. Procédé selon la revendication 1, caractérisé en en ce que le charbon (6) est refroidi avant d'être amené aux lances de brûleur (9).

7. Procédé selon la revendication 1, caractérisé en en ce que la température du charbon (6) est ajustée par l'intermédiaire du débit et/ou de la température du fluide de transport.

8. Procédé selon la revendication 1, caractérisé en en ce qu'il utilise comme fluide de transport un liquide, en particulier l'eau, introduit dans les lances de brûleur (9) pour ajuster la température du charbon (6).

9. Procédé selon la revendication 1, caractérisé en en ce que la combustion du produit (5) en forme de morceaux s'effectue dans un four à chaux à régénération à co-courant et contre-courant qui présente au moins deux puits (1, 2), chacun doté d'une zone de préchauffage (V), d'une zone de combustion (B) et d'une zone de refroidissement (K), ainsi qu'un canal de débordement (3) qui relie les deux puits (1, 2), les deux puits (1, 2) étant utilisés en alternance comme puits de combustion et comme puits d'évacuation des gaz de combustion.
